# EUROPEAN PATENT APPLICATION

(11) **EP 3 912 700 A1**
(43) Date of publication of application: **24.11.2021**
(21) Application number: 20175746.5
(22) Date of filing: 20.05.2020
(51) Int. Cl.: B01D 24/02, B01D 15/00, B01D 24/04

(54) **SEPARATION USING GRANULATE MEDIUM**

(71) Applicant: Technische Universität München, 80333 München (DE)
(72) Inventor: von Heynitz, Christian, 80339 München (DE)
(74) Representative: Lucke, Andreas

(57) **Abstract**

A device and a method for separating a substance from a fluid are disclosed. A chamber encloses a granulate medium to separate the substance from the fluid. The chamber comprising two opposite ends and a sidewall extending therebetween. The sidewall includes an elastic portion which is provided on the inside with an elastic material.

## Description

### TECHNICAL FIELD

The present application relates to reprocessing a fluid mixture and, in particular, to the separation of a substance from a fluid, for example by filtration.

### TECHNICAL BACKGROUND

The separation of a solid or liquid substance from a fluid is relevant in many areas of science, industry and domestic needs, in particular for reprocessing and preparation of a process liquid, household and industry water or air. Some separation systems use a granulate filter medium.

It is desired to provide a device and a method that achieve an increased filtrate yield, an increased separation efficiency and an increased cost and energy efficiency compared to conventional systems, and operate with little interruption. It is further desired to combine the advantages of surface filtration and depth filtration using a granulate medium. Moreover, it is desired to overcome the procedural and economical challenges when backflushing the filter medium. Also it is desired to use a granulate medium comprising granular particles of a reduced size for the sake of an increase of the separation performance.

### SUMMARY

The technical problems as indicated herein are solved by the subject matter of the independent claims. Particular examples of the claimed subject matter are given by the dependent claims.

According to an aspect, a device may be provided. The device may be arranged, configured, operable and suitable to separate a substance from a fluid. The device may comprise a chamber for enclosing a granulate medium, the granulate medium being provided to separate a substance from a fluid. The chamber may comprise two opposite ends and a sidewall extending between the two opposite ends. The sidewall may comprise an elastic portion provided with an elastic material on the inside of said sidewall.

According to a further aspect, a method is disclosed. The method may be suitable for separating a substance from a fluid using the device as disclosed herein. According to the method, the granulate medium may be enclosed in the chamber at the elastic portion. In some examples, before or after feeding the fluid through the chamber, the chamber may be flushed with a flushing fluid to remove the substance from the granulate medium. The step of flushing the chamber and the granulate medium with the flushing fluid may be referred to as backflushing or backwashing.

The device, the chamber and the granulate medium may be arranged such that a fluid fed to the chamber flows through the granulate medium. The granulate medium contains granular particles which may be arranged to form a lattice. The fluid may contain a solid substance as a suspension, as a colloid and/or as a solution. The solid substance in the fluid may be present in different sizes, for example according to a particle size distribution. When the fluid flows through the granulate medium, a solid substance that is larger than gaps between the granular particles (inter-particle gaps) of the granulate medium may be prevented from passing through the granulate medium. The solid substance may be separated from the fluid in this manner.

The granulate medium of the present disclosure may refer to or comprise a filter bed, bed filter medium, granular bed, granulate filter medium, or the like. Hereinafter, the terms granular particles and granulate medium may be used interchangeably unless explicitly indicated otherwise or the context forbids.

The subject matter as disclosed herein may be used for separation of a substance of any state of matter (solid, liquid or gaseous) from a fluid (gaseous or liquid). In particular, the subject matter maybe used for separation of an undissolved substance (suspensions, colloids) from a liquid mixture and/or a dissolved substance (solutions, liquid or gas mixtures) in a liquid solvent. Additionally or alternatively, the device may be further used for liquid-liquid separation, wherein the fluid may contain a liquid substance to be separated in a homogeneous mixture (solution) or a heterogeneous mixture (emulsion). Furthermore, the subject matter as disclosed herein may be used for separation of a substance from a gaseous mixture such as aerosols, dust or a mixture of multiple gases. Accordingly, the device as disclosed herein may be used for a leaching process to extract certain solutes from a carrier fluid. For example, some organic solvents may be extracted from a process fluid through droplet separation at the granulate medium. In such examples, inorganic ions such as metal ions that are dissolved may be extractable together with the retrieved organic solvent.

In the present disclosure, the singular term substance is used to generally indicate any material or material mixture that is contained in a fluid and can be separated from the fluid by using the device or the method disclosed herein. Accordingly, the term substance may indicate a particular target material (e.g. a particular chemical compound in a specific state of matter) that is to be extracted from the fluid. Alternatively or additionally, the term substance may refer to a collective of materials to be separated from the fluid. For example, the substance may comprise different chemical compositions. In some examples, the substance may or may not be limited to specific chemical compositions. In particular, the substance may be defined by its physical properties, such as particle size, regardless of chemical compositions. Furthermore, the substance may be present, before and/or after separation from the fluid, in a single state of matter or in different states of matter simultaneously. For example, the separated substance may be partially in a liquid phase and partially in a solid phase.

The fluid and the substance to be separated may depend on the technical field the subject matter is used in. Some examples of the applicable technical fields include power generation, supply engineering, chemical and petrochemical industry, sewage, (waste-)water treatment, paper industry, (off-shore) oil industry, heating, cooling, air conditioning, mining, automotive and aviation, metal and ceramics industry, synthetic materials industry, manufacturing engineering, textile industry, pigments and dye production, food and beverage industry, pharma and biotech industry, fertilizer production, fish farming, aquaponics and swimming pools. According to the respective application field, the fluid to be processed may be gaseous or liquid, or a mixture thereof.

The fluid containing the substance to be separated may be gaseous, water-based or organic such as oil-based, or any other fluid medium in which the substance is dissolved, suspended, dispersed or otherwise carried. Some examples of the substance to be separated from a fluid mixture include sands, fine gravel, earth, microorganisms, algae, plankton, faeces, dust, chips and any other waste material, rust, corrosion products, fibres, flocculation (e.g. heavy metals), clumps, precipitates, microplastics, skin particles, hair and spores.

In this disclosure, the term separation may indicate a process of obtaining multiple separate materials from a fluid mixture. Herein, the resulting separate materials may be referred to as a separated substance and a filtered fluid (as opposed to an unfiltered fluid before the separation) for the sake of conciseness. For example, the separation may be based on filtration, extraction, sedimentation, adhesion and/or diffusion depending on the field of usage. Depending on the granulate medium used in the device, depth filtration effects may be obtained in addition to surface filtration effects. In particular, depending on the efficacy of the individual separation task and setup, the fluid may contain remains of the substance after being processed by the device or according to the method disclosed herein. As such, the term separation is not limited to elimination or to a complete removal of the substance to be separated from the fluid.

Granular particles of the granulate medium enclosed in the chamber may be arranged in a specific manner mechanically, by gravity and/or by a fluid flow through the granulate medium. For example, assuming a same density or same material, larger granular particles sink faster towards a ground of the chamber than the smaller granular particles due to the ratio of gravitational force to flow resistance.

In an idealized approximation, the granulate medium comprises granular particles that are ideally spherical and have a uniform diameter. In this approximation, the granular particles of the granulate medium may be arranged in a close-packing of spheres such as a regular hcp lattice and/or fcc lattice. In such lattices, a ratio of the diameter of the spherical granular particles to a diameter of the largest possible sphere that can pass through gaps between the granular particles may be about 6.464. At the same time, gaps between the granulate medium and the enclosing sidewall (peripheral openings) may be larger than the gaps between the granular particles of the granulate medium, typically by a factor of 2 to 10, preferably by a factor of 3 to 5.

Accordingly, the peripheral openings between the granulate medium and a non-elastic sidewall that surrounds the granulate medium may be several times larger than inter-particle gaps of the granulate medium. Thus, particulate substance that is to be separated by the granulate medium via surface filtration may pass through the peripheral openings without being separated. Further, partial flows of the fluid may be formed through the peripheral openings. The filtration efficacy of the granulate medium may be deteriorated in this manner.

Accordingly, granular particles of smaller sizes may migrate through the gaps between the sidewall and larger granular particles. In examples where the granular particles of different sizes are arranged in a predetermined manner, in particular in a stack of layers according to the particle size, granular particles migrating through the gaps at the sidewall and thus escaping their initial positions may deteriorate the integrity of the arrangement (structure, inner structure, bed or packing structure) of the granular particles and thus destabilize the granulate medium. In particular, the uniformity of the gaps over a cross-sectional area maybe deteriorated. This may compromise the separation quality of the granulate medium.

The problems may be solved by providing the elastic portion of the sidewall of the chamber with the elastic material on the inside of said sidewall. The elastic portion may be deformable to allow the granulate medium to at least partially sink into the elastic material. There may be pressure components acting on the granulate medium, pressing the granulate medium against the elastic material in the sidewall. For example, the weight of the granulate medium may effect a quasi-hydrostatic pressure and press the granulate medium against the elastic material of the sidewall. Furthermore, the granulate medium may be enclosed in a rigid and dimensionally-stable (form-fitted) enclosure, for example between two solid end plates, such that the granulate medium is pressed against inner walls of the enclosure as a counterforce according to the action-reaction law. In addition, the granulate medium may sink into the elastic material under a pressure that is externally applied to the granulate medium, for example by exerting a fastening force, see below. Accordingly, the elastic portion may help to close or at least reduce the gaps between the granulate medium and the sidewall of the chamber, thereby establishing and maintaining a predetermined arrangement of the granular particles of the granulate medium. In particular, the granulate medium may be arranged in a closer approximation to the ideal close-packing of spheres. Further, the deterioration of the separation efficacy due to enlarged gaps along the surrounding sidewall may be prevented.

In some examples, a pressure or compressing force may be exerted on the granulate medium, thereby pressing the granulate medium into the elastic material on the sidewall of the chamber. Accordingly, the elastic portion of the sidewall may be provided to reduce, or even to seal, the gaps between the granulate medium and the sidewall of the chamber.

Additionally or alternatively, the device may be provided with a container in which the granulate medium is enclosed. The container may form a part of the chamber. The container may be installed or insertable in the chamber of the device in a fluid-tight manner. The container and the rest of the chamber may be fluidly connected. The elastic portion may be provided on the inside of the container. The effects achieved by using such a container may be similar or the same as explained above.

The chamber may have an elongated shape between the two opposite ends. The chamber may have a rotationally symmetric shape such as a regular polyhedron or a cuboid, or an axially symmetrical shape such as a cylinder. The geometrical shape of the cross-section of the chamber may be invariant (i.e. congruent or similar except for scaling) along an elongation axis, i.e. an axis running through centers of the opposite ends of the chamber. For example, the geometrical shape of the cross-section of the chamber may be regular polygonal such as quadratic, circular or ellipsoidal. The cross-sectional area of the chamber may be constant along the elongation axis. In other examples, the cross-sectional area of the chamber may change linearly, exponentially, logarithmically or according to a polynomial.

In some examples, the device may comprise a respective port at any or both of the two opposite ends for feeding the unfiltered fluid into the chamber and/or for discharging the filtered fluid out of the chamber. The two opposite ends of the chamber may be provided with ports to allow the unfiltered fluid and a flushing fluid flowing into the chamber and/or flowing out of chamber. As such, any of the ports may be used as an inlet port and/or an outlet port. As discussed below, a flow direction of the unfiltered fluid and a flushing flow direction may be reversed. Accordingly, one end of the two opposite ends of the chamber may be provided with an inlet port for the unfiltered fluid and an outlet port for the flushing fluid, and the other end of the two opposite ends may be provided with an outlet port for the filtered fluid and an inlet port for the flushing fluid. In some examples, any of the two opposite ends of the chamber may be provided with a single port that may be usable for both the unfiltered fluid (or filtered fluid) and the flushing fluid.

The device may be fluidly connected with a fluid supply of the unfiltered fluid and a fluid supply of the flushing fluid. Further, the device may be fluidly connected with a tank or a sink to receive the filtered fluid and/or the flushing fluid flowing out from the chamber.

In some examples, the device may include the granulate medium, i.e. the device may be provided with the granulate medium being arranged in the chamber of the device. In other examples, the granulate medium may not form a part of the device. For example, the granulate medium may be available independently from the device. In particular, the granulate medium may be provided such to be refillable, replenishable, reusable and/or exchangeable.

The device may be operable using any granulate medium that can be filled into the chamber of the device. The device is not limited to any specific granulate medium. Different types of granulate media may be available for use with the device. A particular granulate medium may be selected taking into account the properties of the unfiltered fluid as well as the substance that is to be separated therefrom. For example, at least one of a viscosity and flow rate of the unfiltered fluid, an expected size distribution, volume fraction, load and weight of the substance in the unfiltered fluid may be taken into account.

The term granulate medium as used herein may be defined according to the usage in the technical fields of separation and filtration technology. The granulate medium may be a conglomerate of granular particles that are discrete solid particles. The granular particles may have a particle size on a microscopic scale, for example 0.1 µm to 10 mm, preferably 0.5 µm to 1 mm, more preferably 1 µm to 1 mm. The particle size may refer to a diameter for near-spherical granular particles or to the largest diagonal for arbitrarily shaped granular particles. The particle size may be in accordance with the sieve analysis, for example as defined by the German standard DIN 66165. Alternatively or additionally, the particle size may be determined via laser diffraction analysis, for example according to the international standard ISO 13320.

According to some examples, the granulate medium may comprise ellipsoidal or ovoid particles. In particular, the granulate medium may comprise spherical particles, which may be approximately spherical due to manufacturing limits. The granular particles of the granulate medium may be also referred to as beads, spheres or balls. Further, the terms particle size and particle diameter may be used interchangeably unless otherwise indicated.

Using round, in particular spherical, granular particles may have the advantage of reduced abrasion due to lack of edges and corners, and well-defined separation accuracy for being close to a close-packing of spheres. Further, the hydraulic permeability may be increased, thereby reducing differential pressure requirements and pressure loss, the cleaning efficacy may be increased, deposition of biofilms or minerals on the surface of the granular particles may be reduced, determining the particle size and distribution may be facilitated and the availability may be improved.

In some examples, the granular particles of the granulate medium may comprise glass beads. Such granular particles may be efficient and cost-effective. Further, glass beads may be produced from recycled materials, thereby also being environmentally friendly. In addition, glass beads show a high thermal, chemical and mechanical resistance as well as satisfactory hydraulic properties. Further, glass beads may provide a rather constant quality compared to other materials such as quartz and sands, be available with well-defined particle sizes and densities, and be already certified and accepted by many food and pharmaceutical standards.

With such granular particles being used in the granulate medium, the device may allow high flow rates of the unfiltered fluid and thus the treatment of large volume flows at small plant footprint. Furthermore, a well-defined separation accuracy may be provided and the amount of a required granulate medium may be reduced due to an increased throughput and lower bed heights when compared to (purely) depth filtration systems.

According to some examples, the granulate medium may contain granulate particles coated with a catalytic compound. The catalytic compound may support a particular separation or extraction process, which may be physical, chemical or biological, or any combination thereof. Such a separation or extraction process may include, inter alia, an adsorption reaction at the surface of the granular particles of the granulate medium. Moreover, at least a part of the granulate medium may be prepared for functions beyond filtration and separation. For example, additives such as activated carbon may be added to the granulate medium for the adsorption of impurities. In further examples, the surface morphology of the granular particles may be modified via surface treatment. Moreover, the granular particles may be coated with a specific material, for example with silver for disinfection or with a metal oxide for catalytically supported removal of impurities such as manganese or organic impurities. In further examples, a physical property or an electrical charge distribution on the surfaces of the granular particles may be modified via proper surface treatments.

Furthermore, a UV light source may be inserted into or coupled to the granulate medium. When using transparent glass beads as granular particles of the granulate medium, the UV light from the UV light source can propagate within the granulate medium, which may exhibit antimicrobial effect.

The elastic portion may be formed by lining or coating the inside of the sidewall of the chamber with a layer of the elastic material. For example, the elastic material may be glued or otherwise attached to the inside of the sidewall of the chamber. In some examples, an adhesive layer such as a pressure-sensitive adhesive layer may be used to attach the elastic material to the sidewall of the chamber. In some examples, the elastic portion may be detachable from the sidewall of the chamber, for example to be re-arranged, cleaned or exchanged. This may increase the versatility of the device and facilitate the maintenance of the device.

The elastic material provided on the elastic portion of the sidewall of the chamber may be a soft material that allows the granular particles of the granulate medium to at least partially sink into the elastic portion. The elastic portion can be a polymer of low Shore hardness, especially a silicone, and/or can have a thickness of 0.1 to 10 mm. As such, the elastic portion may have a satisfactory softness to properly close or at least reduce the gaps between the granulate medium and the sidewall of the chamber.

In some examples, the elastic material may comprise a polymer having a Shore-A hardness of 60 or less. The Shore hardness of A type may be determined in accordance with the standard ASTM D2240. Accordingly, a depth of an indentation in the tested elastic material created by a given force on a standardized presser foot may be measured. The depth is dependent on the hardness of the material, its viscoelastic properties, the shape of the presser foot, and the duration of the test. According to the standard ASTM D2240, a hardened steel rod with a diameter of 1.1 mm - 1.4 mm and a truncated 35° cone of 0.79 mm diameter is pressed onto the test sample with a mass of 0.822 kg, equivalent to a weight of 8.064 N. The test is carried out in a consistent manner over a given time without shock and the depth of the indentation is measured. The test sample has a minimum thickness of 6 mm. As such, the elastic portion may have a satisfactory softness to properly close or at least reduce the gaps between the granulate medium and the sidewall of the chamber.

In some examples, the elastic material may comprise a polymer having an elastic modulus of 5 GPa or less. The elastic modulus may be determined via dynamic mechanical analysis (for example by a dynamic mechanical thermal analysis device EPLEXOR® series by NETSCH Instruments GmbH, Selb/Germany) where a sinusoidal stress is applied and the strain in the test material is measured, from which the elastic modulus is calculated. As such, the elastic portion may have a satisfactory softness to properly close or at least reduce the gaps between the granulate medium and the sidewall of the chamber.

According to some examples, the device may further comprise a first plate and a second plate. The first plate and the second plate may be arranged in the chamber of the device such that the first plate, the second plate and at least a part of the elastic portion together enclose a fill volume. The fill volume may be filled with the granulate medium. For example, the first plate may be a top plate and the second plate may be a bottom plate of the fill volume, i.e. of the enclosure formed by the first plate, the second plate and at least a part of the elastic portion. In particular, the fill volume may be fully filled with the granulate medium, for example by pressing the first plate and/or the second plate against the granulate medium. Accordingly, the fill volume and the granulate medium may have approximately the same three-dimensional shape and the same volume. In particular, the fill volume may be dimensionally stable, e.g. due to a form-fitting of the enclosure of the fill volume, such that the granulate medium enclosed in the fill volume may be pressed against the elastic material in the sidewall as a counterforce according to the action-reaction law.

Any of the first plate and the second plate may be a flat plate of a constant thickness. The cross-section of any of the first plate and the second plate in top view may have a shape that is similar (in mathematical and geometrical terms) to the shape of the cross-section of the chamber. For example, the shape of the cross-section of any of the first plate and the second plate in top view may be ellipsoidal, circular or polygonal such as rectangular or square.

In particular, the second plate may comprise one nozzle or an array of nozzles to introduce a fluid (e.g. the unfiltered fluid) into the fill volume. For example, the nozzle(s) of the second plate may be configured to introduce the fluid with a defined flow pattern. In such examples, the second plate may also be referred to a nozzle floor.

Accordingly, the first plate, the second plate and the elastic portion may provide an enclosure to contain the granulate medium. Herein, the expressions enclosure or enclosing may indicate that the granular particles of the granulate medium are held in a fixed manner such that they cannot move with the fluid that flows through the granulate medium. Furthermore, the first plate, the second plate and the elastic portion may enclose the granular particles such that the granular particles are prevented from escaping from the enclosure as well as from their initial positions in the arrangement of the granulate medium (hereinafter the arrangement of the granulate medium). Accordingly, the enclosure by the first plate, the second plate and the elastic portion of the device may secure the integrity of the arrangement of the granulate medium.

In some examples, the granular particles of the granulate medium are stacked such that the particle size increases from top to bottom. In some conventional systems, the unfiltered fluid is fed to the granulate medium from the top, and the flushing fluid is fed from the bottom. Some conventional filtration systems do not provide an enclosure of the granular particles so that the granulate medium is loose and freely movable with the fluid flow inside the chamber. Hence, during backflushing from below, the granular particles are swirled up by the flow from below and move with the currents in the chamber (the granulate medium is thus "fluidized"). After backflushing, larger granular particles sink to the bottom faster than the small granular particles due to the ratio of weight force to flow resistance. As a result, the smallest granular particles are located in the uppermost area of the granulate medium. Since the smallest granular particles form the smallest inter-particle gaps in between, a layer of separated substances forms on top of the granulate medium within a short period of time when the unfiltered fluid is fed through the granulate medium. This blocks the flow passage through the granulate medium and thus increases a flow resistance and the necessary differential pressure across the chamber. Thus, a backflushing needs to be carried out soon again to remove the layer of separated substances, resulting in increased time and cost requirements and reduction of the throughput.

It is further noted that using only smaller granular particles of a uniform particle size is difficult to provide or sometimes even impossible, due to the limitations from the manufacturing of the granular particles. Moreover, it may be desired to have larger granular particles on the bottom of the chamber adjacent to nozzles for introducing the flushing fluid. In addition, smaller granular particles are more likely to be carried away by the flushing fluid during the backflushing, thereby reducing and deteriorating the granulate medium. In addition, if the granulate medium is not enclosed and fixed, dominant flow paths may emerge in the areas above the nozzles, through which the flushing fluid preferentially flows rather than homogeneously through the entire chamber, thereby reducing the efficiency and efficacy of the backflushing.

In view of the above, by enclosing the granulate medium by the first plate, second plate and at least a part of the elastic portion of the device, the granular particles can be held in their intended positions within the arrangement of the granulate medium during filtration as well as during backflushing. Furthermore, the structural stability of the arrangement of the granulate medium may be maintained by tightly holding the granular particles.

According to some examples, the first plate and the second plate may each have openings to allow a fluid (generally referring to any of unfiltered fluid, filtered fluid and/or flushing fluid) to flow through. For example, any of the first plate and the second plate may be provided as a mesh or grating. In further examples, any of the first plate and the second plate may be provided as a perforated plate. The perforated plate may have an array or pattern of through-holes for the fluid to flow through. The shape of the through-holes is not limited to a particular shape. Examples of the shape of the through-holes may include linear shape, curved linear shape, ellipsoidal shape, circular shape, polygonal shape, cross-shape, star-shape, or the like or any combination thereof. The linear shape or the cross-shape may be helpful to prevent clumping at the through-holes. A gap size of the through-holes (e.g. a smallest in-plane width of a single through-hole) of the first plate and/or the second plate may be 20% to 90% of the average particle size of the granular particles arranged adjacent to (e.g. in physical contact with, or within less than 10 layers of granular particles) the respective plate. The perforated plate may be made of a metal or metal alloy, such as steel. Accordingly, the fluid flow through the first plate and/or the second plate may be enabled with acceptable flow resistance.

In particular, through-holes formed in the perforated plate may have sizes (e.g. diameter, largest gap distance, etc.) that are smaller than the particle size of the adjacent granular particles. Accordingly, the granular particles may be prevented from escaping from the enclosure and from the arrangement of the granulate medium.

According to some examples, the first plate may comprise openings that allow a fluid to flow through, wherein diameters of the openings of the first plate may be 20% to 90% of the average particle size of the granular particles arranged adjacent to the first plate. Additionally or alternatively, the diameters of the openings of the first plate may be smaller than D25, smaller than D20, or smaller than D10. D10 may refer to the largest particle size of the smallest 10 vol.% of the granular particles. As such, 10 per cent by volume of the granular particles have a smaller particle size than D10. The definition applies similarly to other D-values such as D20, D25, D50, D90, etc. The particle size may be determined as discussed above, for example via sieves analysis or laser diffraction analysis according to the respective standard.

According to some examples, the device may further comprise a fastening unit that may exert a fastening force on the first plate. Additionally or alternatively, the fastening unit may exert a fastening force on the second plate. The fastening force may be applied to press together the granulate medium. In this context, the expression pressing together may be equivalent to compacting or compressing. Accordingly, the enclosure of the granulate medium by the first plate, the second plate and at least a part of the elastic portion of the sidewall of the chamber may be subjected to a fastening force in order to compact the granulate medium. Furthermore, the fastening force may hold together the enclosure.

For this purpose, any of the first plate and the second plate may be provided such in terms of a respective thickness and material elasticity to provide a sufficient rigidity to transfer the fastening force to the granulate medium. In particular, any of the first plate and the second plate may be provided such to transfer the fastening force to the granulate medium as evenly as possible across an entire cross-sectional area of the granulate medium. For example, any of the first plate and the second plate may be made of a glass material, a thermosetting polymer, a metal or a metal alloy, such as steel.

For example, the fastening unit may comprise a threaded portion and a screw. The fastening force may be transferred from the fastening unit to the first plate and/or the second plate via contact points. The contact points may be physical contacts between the respective plate and the chamber fastened to each other via screws.

In some examples, the fastening unit may comprise one or more spiral springs pressing the first plate towards the second plate and/or vice versa. The spiral springs may have the advantage that possible volume decreases of the granulate medium over time due to loss of granular particles may be simply compensated by an extended spiral deflection without losing the fastening force. Accordingly, the fastening force on the first plate and/or the second plate and thus on the granulate medium may be maintained in a secure manner.

According to some examples, the granulate medium fills the fill volume. The granulate medium may be arranged such that an average particle size (or average particle diameter, see above) of the granulate medium gradually increases in a direction towards the second plate. Accordingly, the smallest granular particles may be arranged adjacent to the first plate and the largest granular particles may be arranged adjacent to the second plate. With the granular particles being enclosed and held together in a fixed manner as described above, the unfiltered fluid may be fed to the granulate medium from below such that the unfiltered fluid first flows against the largest granular particles and, subsequently, other granular particles of decreasing particle sizes. Accordingly, the separation of the substance from the unfiltered fluid may be better distributed over the height of the granulate medium.

According to some examples, the fill volume may have a first portion adjacent to the second plate. The granulate medium in the first portion may be arranged such that the average particle size of the granulate medium gradually increases in a direction towards the second plate. The first portion may extend from the second plate to a layer at a certain distance from the first plate. For example, the first portion may extend from the second plate to a height equivalent to 60%, or 70%, or 80%, or 90%, or 95%, or 99% of the distance between the first plate and the second plate.

In further examples, the first portion of the fill volume may not extend to the second plate, but to a certain distance from the second plate. For example, an area adjacent to the second plate may be occupied by the largest granular particles, such that the particle size does not increase further. Moreover, the particle size may increase up to a layer located at a certain distance from the second plate and then decrease towards the second plate.

According to some examples, the fill volume may further comprise a second portion. The second portion may be adjacent to the first plate. The first portion and the second portion may be arranged adjacent to each other without overlapping each other. Accordingly, there may be a boundary area between the first portion and the second portion. The first portion may extend from (close to) the second plate to the boundary area. The second portion may extend from (close to) the first plate to the boundary area. The shortest distance between the first plate and the boundary area may be referred to as a first height (height of the first portion). The shortest distance between the second plate and the boundary area may be referred to as a second height (height of the second portion). The first height and the second height may be determined along a same axis, which may, for example, be parallel to an elongation or symmetry axis of the chamber and/or go through centers of the first plate and the second plate.

In such examples, a ratio of the first height to the second height may be between 100 : 1 and 1 : 1. In some specific examples, said ratio may be between 50 : 1 and 1.5 : 1, preferably between 20 : 1 and 2 : 1, more preferably between 10 : 1 and 2.5 : 1. The ratio may depend on the individual particle size distribution of the granulate medium. Generally, the term height as used herein may indicate a dimension along an elongation and/or symmetry axis of the chamber substantially parallel to a flow direction of the fluid. For example, the height may be measured along an axis running through centers of the first plate and the second plate. Accordingly, the height of the first portion may correspond to a distance between the second plate and the boundary area. The height of the second portion may correspond to a distance between the first plate and the boundary area.

The granulate medium may be arranged such that the particle sizes of the granular particles in the first portion gradually increase, the closer the granular particles are to the second plate. Further, the granulate medium may be arranged such that the particle sizes of the granular particles in the second portion gradually increase, the closer the granular particles are to the first plate. In combination, the particle sizes of the granular particles may decrease in the first portion and the second portion, the closer the granular particles are located to said boundary area. As a result, the granular particles with the smallest sizes may be located at and near the boundary area.

In such examples, the granulate medium may be arranged such that the average particle size in the second volume is larger than D10, preferably larger than D25, more preferably larger than D50, of the granulate medium. Accordingly, the granular particles arranged adjacent to the first plate may be sufficiently large to prevent smaller granular particles from escaping through the openings formed in the first plate. As mentioned above, in an approximate close-packing, the largest particle diameter to pass through the gaps between the spherical particles forming the close-packing is 1/6.464. Thus, granular particles having a particle size of D10 or larger may block the smaller granular particles from escaping in a satisfactory manner.

When an unfiltered fluid is fed through the second plate and flows through the granulate medium towards the first plate, the unfiltered fluid first flows against larger granular particles in the first portion and, subsequently, against gradually smaller granular particles in the first portion. As a result, the separation of the substance from the unfiltered fluid is optimized in terms of an optimized distribution over the height of the granulate medium. Further, the larger granular particles in the second portion may prevent smaller granular particles from escaping from the enclosure (fill volume) of the chamber. In particular, due to the gradual increase of the particle sizes of the granular particles in the second portion, the smaller granular particles may be effectively prevented from escaping through inter-particle gaps in the second portion.

In some examples, the arrangement of the granular particles in terms of the particle size may be adapted to the individual separation task, in particular in accordance with an expected particle size distribution of the substance to be separated from the unfiltered fluid. In particular, the granular particles may be arranged such that the separation of the substance from the unfiltered fluid takes place as homogeneously as possible over the entire height of the granulate medium. Accordingly, the usage of the gaps between the granular particles for the filtration purpose may be optimized. Further, formation of blockages in the granulate medium may be reduced or prevented. Accordingly, the separation may be performed in an energy and cost efficient manner in terms of minimizing the differential pressure and reducing a backflushing frequency.

In a specific example, assuming that dust particles may be substances to be separated from a process water, it may be known from measurement and/or calculation results that particle sizes of the dust particles are distributed according to a Gaussian distribution around a peak at 0.1 mm. Accordingly, the granular particles may be arranged such that the inter-particle gaps between the granular particles are 0.1 mm ± 0.01 mm in a bulk area of the granulate medium corresponding to 20% to 80% of the entire height of the granulate medium. Assuming that the unfiltered fluid is fed from below, granular particles with a particle size larger than 0.11 mm may be arranged below said bulk area, and granular particles with a particle size smaller than 0.09 mm may be arranged above said bulk area. Accordingly, the separation of the dust particles may be better distributed over the height of the granulate medium, thereby increasing the efficiency of the separation.

In addition, the three-dimensional shape of the chamber may be modified. In particular, the chamber may be shaped such that the cross-sectional area of the chamber increases linearly along a flow direction, thereby optimizing the distribution of the separation over the entire granulate medium. For example, if the cross-section of the chamber is rectangular, two opposing sides of the cross-section of the chamber may increase linearly. In other examples, if the cross-section of the chamber is circular, the diameter of the cross-section of the chamber may be increased or decreased according to a square root of the distance from a boundary layer of the granulate medium. Moreover, the cross-sectional area of the chamber may be modified such to modify fluid flow velocities (in terms of magnitude and/or direction) in different areas within the chamber.

According to some examples, a thickness of the elastic material in the elastic portion is equivalent to D10 to two times of D90 (2 ^{∗} D90) of the granulate medium. As such, the elastic portion has a sufficient thickness to allow the granular particles of the granulate medium to sink into the elastic portion, in particular including the largest granular particles of the granulate medium. Accordingly, the gaps between the sidewall of the chamber and the granulate medium may be efficiently sealed or at least reduced.

According to some examples, an ultrasonic unit may be coupled to the chamber such to generate an ultrasonic wave in the fill volume. The ultrasonic device may support the cleaning process of the granulate medium in addition to the backflushing. At least one ultrasonic transducer may be inserted into the granulate medium or be in mechanical contact with at least one of the first plate, the second plate, the chamber body and the nozzles (if applicable). The ultrasonic wave may create micro-vibrations to break up particles and shaking them off from surfaces of the granular particles. Further, the ultrasonic wave may locally create cavitation bubbles due to temperature and pressure peaks in the (flushing) fluid. In particular, in case that the granular particles are compacted by a fastening force, a good surface contact is provided between the granular particles, which may expedite the propagation of the ultrasonic wave.

According to some examples, a method of separating a substance from an unfiltered fluid comprises filling the fill volume with a granulate medium and pressing the granulate medium together. According to the method, the fluid is fed to the granulate medium through the second plate, thereby allowing the substance to be separated from the fluid at the granulate medium. The fluid is discharged through the first plate. Before or after the feeding of the fluid to the granulate medium, a flushing fluid is fed through the granulate medium through the first plate, thereby removing the substance from the chamber. The flushing fluid is discharged through the second plate.

Accordingly, a flow direction of filtration and a flow direction of backflushing are opposite to each other and opposite to some conventional systems. As a result, the granular particles of the granulate medium are prevented from fluidization, i.e. lifting and swirling up, and thus from escaping from their intended positions and from the granulate medium, in particular during backflushing. This allows higher flow velocities of the flushing fluid flow relative to the (static) granulate medium and thus higher shear forces for the removal of the filtered substance from the granular particles.

According to some examples, a load cell may be installed at a contact point between the fastening unit and the granulate medium. The load cell may be used to monitor a force transmission between the fastening unit and the granulate medium. In particular, the load cell may monitor the fastening force applied by the fastening unit to the granulate medium, e.g. via the first plate and/or the second plate, in a time-dependent manner. Accordingly, the load cell may be used to monitor a change of the force exerted on the granulate medium and thus the stability of the granulate medium. If the granulate medium degenerates (shrinks) over time for example due to chemical or mechanical effects, this may be sensed, for example, as a decrease in the measured fastening force. Hence, the risk of diminishing efficiency of separation or backflushing may be reduced.

### BRIEF DESCRIPTION OF THE DRAWINGS

- FIG. 1: is a schematic diagram of a chamber of a device in a cross-sectional view according to an example.
- FIG. 2: is a schematic diagram of a chamber of a device in a cross-sectional view according to a further example.
- FIG. 3: is a schematic diagram of a chamber of a device in a cross-sectional view according to yet another example.
- FIG. 4: shows flow diagrams of examples of a method for separating a substance from a fluid.

### DETAILED DESCRIPTION

In the following, some particular examples are described in connection with the accompanying drawings. Same reference signs may indicate same or at least similar features. Any of the above described features and the respective technical effects may apply accordingly to the corresponding features described below in connection with the drawings.

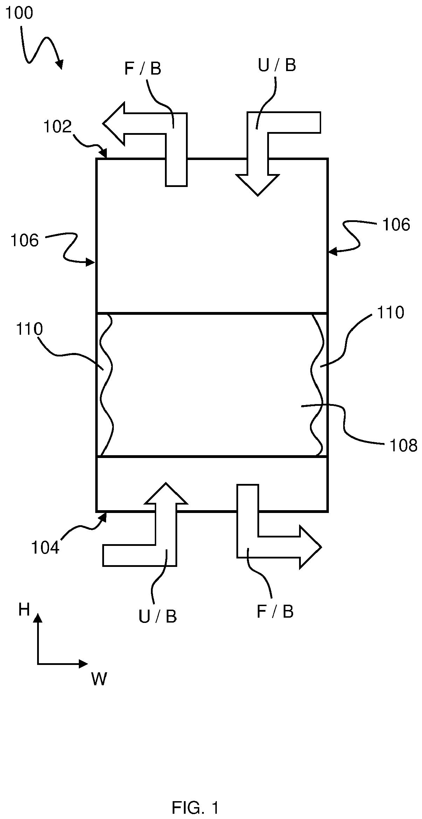

FIG. 1 shows a chamber 100 of a device according to an example. The chamber 100 has two opposite ends 102, 104 and a sidewall 106 extending between and connecting the two opposite ends 102, 104. In the drawings, the two opposite ends 102, 104 may be referred to as a top end face 102 and a bottom end face 104.

In the cross-sectional view of FIG. 1 and also in the following drawings, the chamber 100 is schematically illustrated to have a rectangular vertical cross-section (i.e. cut along a height direction H). In other examples not shown in the drawings, the vertical cross-section of the chamber 100 may have any other shape, for example a trapezoidal shape or an inversed U-shape with both ends truncated.

In a horizontal cross-section (i.e. cut along a width direction W), the chamber 100 may have an ellipsoidal shape, circular shape or polygonal shape such as square, rectangular, hexagonal. The horizontal cross-sectional shape of the chamber 100 may be invariant along an entire height of the chamber 100.

A portion 108 of the sidewall 106 of the chamber 100 is provided with an elastic material 110. As such, the portion provided with the elastic material on the inside may be referred to as an elastic portion 108. The elastic material 110 is attached on the inside of the elastic portion 108 of the sidewall 106. In FIG. 1, the elastic portion extends from a position near the bottom end face 104 towards the top end face 102 to a position near a center of the chamber 100. The positioning of the elastic portion 108 in the drawings is an illustrative example. The elastic portion 108 may be formed at any different position inside the chamber 100 or extend from the top end face 102 to the bottom end face 104.

The elastic material 110 may be a polymer material having a Shore-A hardness of 60 or less. The Shore-A hardness may be determined as discussed above. Additionally or alternatively, the elastic material 110 may have an elastic modulus of 5 GPa or less, wherein the elastic modulus may be determined as discussed above. The elastic material 110 may be made of silicone.

The chamber 100 may or may not include a granulate medium as an integral part of the device. Wherein no granulate medium is depicted in FIG. 1, a granulate medium may be enclosed in the chamber 100 in a portion surrounded by the elastic portion 108. Such enclosure of the granulate medium may be provided with further enclosure measures such as a top plate and a bottom plate. In some examples not shown in the drawings, at least one of the top plate and the bottom plate may be provided by the top end face 102 and/or the bottom end face 104, respectively.

If the chamber 100 encloses a granulate medium which is a conglomerate of granular particles, the elastic material 110 on the inside of the elastic portion 108 is sufficiently elastic (sufficiently soft) to allow the granular particles of the granulate medium to sink into the surrounding elastic material 110. In a configuration where the arrangement of the granulate medium is maintained, this may allow to close gaps between the granular particles and the sidewall 106 of the chamber 100. Accordingly, escaping of smaller granular particles from the arrangement of the granulate medium may be prevented, thereby securing the integrity of the arrangement of the granulate medium. Moreover, the deterioration of the separation efficacy due to enlarged gaps along the surrounding sidewall may be prevented.

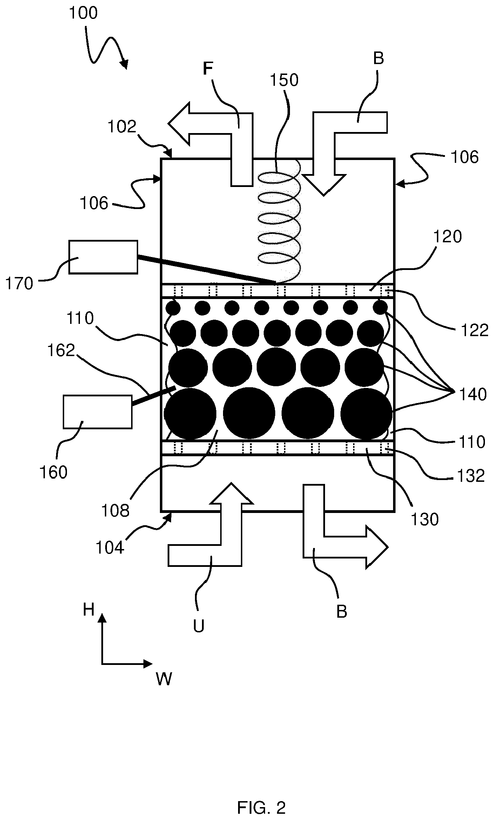

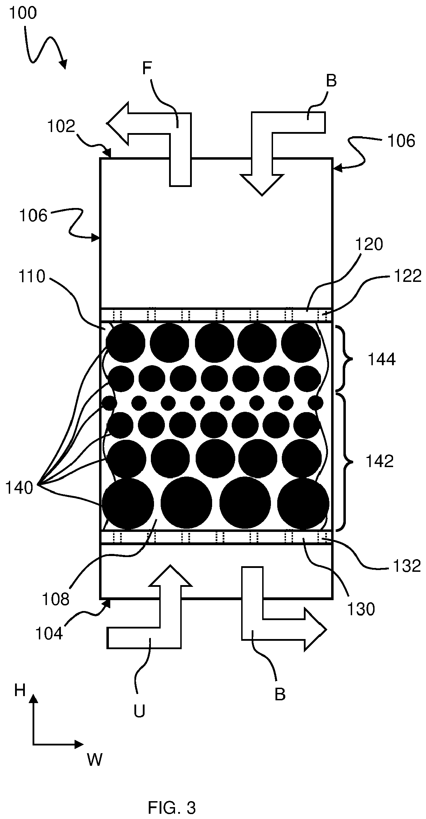

As discussed above, the elastic material 110 is deformable such that the granulate medium 140 may at least partially sink into the elastic material 110. There are pressure components acting on the granulate medium 140 such that the granulate medium 140 is pressed against the elastic material 110 in the elastic portion 108 of the sidewall 106. For example, the pressure components may include the weight of the granulate medium 140 which effects a quasi-hydrostatic pressure. Furthermore, the granulate medium 140 may be enclosed in a rigid and dimensionally-stable enclosure, as for example shown in FIG. 2 or 3, such that the granulate medium 140 is pressed against the elastic material 110 as a counterforce according to the action-reaction law. Moreover, an external pressure may be applied onto the granulate medium 140, for example in a height direction H. Accordingly, the elastic portion 110 helps to reduce, or even completely close, gaps (peripheral gaps) between the granulate medium 140 and the sidewall 106 of the chamber 100. As a result, a predetermined arrangement of the granulate medium 104 may be secured in terms of the structural integrity. This may further help the granulate medium 104 to be arranged in a closer approximation to the ideal close-packing of spheres. Moreover, the deterioration of the separation efficacy due to the presence of enlarged peripheral gaps may be prevented.

The chamber may be further provided with one or more ports at each of the top end face 102 and the bottom end face 104. The ports may be used to feed an unfiltered fluid U or a backflushing fluid B to the chamber 100. Other or the same ports may be further used to discharge a filtered fluid F or the (back-)flushing fluid B from the chamber 100.

As illustrated in FIG. 1, the unfiltered fluid U may be fed to the chamber 100 through the top end face 102, flow through the granulate medium (not shown in FIG. 1), and a filtered fluid F may be discharged from the chamber 100 through the bottom end face 104. In other examples, the unfiltered fluid may fed to the chamber 100 through the bottom end face 104 and flow through the granulate medium, and the filtered fluid F may be discharged from the chamber 100 through the top end face 102. The filtered fluid F may refer to a rest of the unfiltered fluid after the separation of the substance from the unfiltered fluid U.

Similarly, the flushing fluid B may be fed to the chamber 100 through the top end face 102 (or through the bottom end face 104), flow through the granulate medium (not shown in FIG. 1) and may be discharged from the chamber 100 through the bottom end face 104 (or through the top end face 102).

In examples in that the granulate medium is fixedly held inside the chamber 100, the unfiltered fluid U may be fed to the chamber 100 through the bottom end face 104, and the filtered fluid F may be discharged from the chamber 100 through the top end face 102. The flushing fluid B may be fed to the chamber 100 through the top end face 102 and be discharged from the chamber 100 through the bottom end face 104.

FIG. 2 shows another example of a device. The device shown in FIG. 2 includes a granulate medium 140, which is a conglomerate of granular particles. In the drawings, the granular particles are not provided with respective reference signs for the sake of intelligibility.

The device further comprises a first plate 120 and a second plate 130 arranged in the chamber 100. The first plate 120 and the second plate 130 are arranged in the chamber 100 such that the first plate 120, the second plate 130 and at least a part of the elastic portion 108 enclose a fill volume (not explicitly indicated by a reference sign in the drawings) filled with the granulate medium 140. The first plate 120 has openings 122 to allow the unfiltered fluid U, the filtered fluid F and/or the flushing fluid B, to flow through the first plate 120. The second plate 130 has openings 132 to allow the unfiltered fluid U, the filtered fluid F and/or the flushing fluid B to flow through the second plate 130.

The shape and material of the first plate 120 and the second plate 130 may be as discussed above. For example, the first plate 120 and the second plate 130 may be disc-shaped steel plates with a respective array of circular openings 122, 132. The openings 122, 132 are through-holes to allow the unfiltered fluid U, the filtered fluid F and the flushing fluid B to pass through. The openings 122 may be dimensioned such to prevent the granular particles from escaping the fill volume. For example, the openings 122 may have a gap size equivalent to 20% to 90% of the granular particles that are arranged adjacent to the first plate 120.

In other examples (not shown), the first plate 120 and/or the second plate 130 may be provided as a nozzle floor. In particular, the second plate 130 may comprise one or more nozzles to introduce the unfiltered fluid (and/or the flushing fluid B) into the fill volume and thus to the granulate medium 140. For example, the nozzle(s) may be provided to introduce said fluid with a defined flow pattern.

The first plate 120 and the second plate 130, together with at least a part of the elastic portion 108, enclose the fill volume. In the example shown in FIG. 2, the granulate medium 140 filling the fill volume is arranged such that an average particle size of the granular particles of the granulate medium 140 increases from the first plate 120 towards the second plate 130.

As described above, there are multiple pressure components acting on the granulate medium 140 such to press the granulate medium 140 against the elastic portion 110, such that the granulate medium 140 at least partially sinks into the elastic portion 110. For example, the fill volume of the granulate medium 104 provided by the first plate 120, the second plate 130 and the elastic portion 108 (including elastic material 110) of the sidewall 106 may be rigid and dimensionally-stable (form-fitted) such that the granulate medium 140 is pressed against the elastic material 110 as a counterforce according to the action-reaction law. Further, the weight of the granulate medium 140 may effect a quasi-hydrostatic pressure such that the granulate medium 140 is pressed against the elastic material 110.

The device further comprises a fastening unit 150 to apply a fastening force on the first plate 120. In the example shown in FIG. 2, the fastening unit is a coil spring restrained between the chamber 100 (e.g. the top end face 102) and the first plate 120. Accordingly, the first plate 120 is pressed against the granulate medium 140. As a result, the granulate medium 140 (i.e. the granular particles of the granulate medium 140) may be pressed together and compacted. As a result, the granular particles of the granulate medium 140 may be prevented from escaping the intended arrangement, in this example from top to bottom according to an increasing average particle size, thereby securing the integrity of the arrangement of the granular particles 140.

Alternatively or additionally, the fastening unit 150 may be arranged such to apply a fastening force to the second plate 130, thereby pressing the second plate 130 against the granulate medium 140 (not shown in FIG. 1). Moreover, the device may further comprise a screw-thread-connection (not shown) between any of the first plate 120 and the second plate 130 and the chamber 100 to exert a fastening force on the respective plate 120, 130.

The openings 122 of the first plate 120 have a gap size that is 20% to 90% of an average particle size of the granular particles that are arranged adjacent to the first plate 120. Similarly, the openings 132 maybe sized such to prevent the adjacent granular particles from escaping from the fill volume and the granulate medium 140. The openings 122, 132 may have a linear shape or a cross-shape in a top view with the gap size as discussed above.

In a filtration operation in the arrangement shown in FIG. 2, the unfiltered fluid U is fed to the chamber 100 through the bottom end face 104 and to the granulate medium 140 through the second plate 130. The unfiltered fluid U is filtered, i.e. a target substance is separated from the unfiltered fluid U, while flowing through the granulate medium 140. As a result, the filtered fluid F flows out through the first plate 120 and discharges from the chamber 100 through the top end face 102. Accordingly, the unfiltered fluid U first flows against the largest granular particles of the granulate medium 140 and then subsequently against granular particles of decreasing particle sizes. This results in a good distribution of the separation cross-section over the entire height of the granulate medium 140, thereby increasing the efficiency of the separation process.

In a backflushing operation, the flushing fluid B is fed to the chamber through the first end face 102, flows through the granulate medium 140, washes the granular particles and is discharged from the chamber 100 through the bottom end face 104. Since the granular particles of the granulate medium 140 are contained, compressed and fixedly held between the first plate 120 and the second plate 130, the granulate medium 140 is not fluidized by the flow of the flushing fluid B. Accordingly, the shear force of the flushing fluid B for the removal of the substance(s) extracted from the unfiltered fluid U may be increased, thereby increasing the efficacy and time-efficiency of the backflushing operation.

In addition, the device shown in FIG. 2 may further comprise an ultrasonic unit 160 to generate an ultrasonic wave in the fill volume. The ultrasonic unit 160 is coupled to the chamber 100 via a coupler 162. In FIG. 2, the ultrasonic wave generated by the ultrasonic unit 160 is coupled into the fill volume and thus directly to the granulate medium 140. In other examples (not shown), the ultrasonic unit 160 may be coupled to the body of the chamber 100, to any of the first plate 120 and the second plate 130, or to any other suitable contact point enabling a coupling with the chamber 100. The ultrasonic wave transmitted to the granulate medium 140 may support the removal of the substance separated from the unfiltered fluid U from surfaces of the granular particles of the granulate medium 140.

Furthermore, the device in FIG. 2 may comprise a load cell 170 installed at a contact point between the fastening unit 150 and the granulate medium 140. The load cell 170 may measure a force transmission between the fastening unit 150 and the granulate medium 140. In this manner, the stability of the granulate medium 140 may be monitored using the load cell 170. For example, if the granulate medium 140 degenerates and shrinks due to loss of granular particles, the force transmission (fastening force) applied on the granulate medium 140 may decrease. In response, a user may replenish, rearrange or exchange the granulate medium 140. Accordingly, the risk of diminishing efficiency of separation or backflushing may be reduced.

FIG. 3 shows a further example of a device. In the device of FIG. 3, the granular particles of the granulate medium 140 can be subdivided into a first portion 142 adjacent to the second plate 130 and a second portion 144 adjacent to the first plate 120. The first portion 142 extends from the second plate 130 in the height direction H to a first height. The second portion 144 extends from the first plate 120 in the height direction H to a second height. The ratio of the first height to the second height may be between 1 : 1 and 100 : 1.

As illustrated in FIG. 3, the average particle size of the granular particles in the first portion 142 increases, the closer the granular particles are located to the second plate 130. Accordingly, the unfiltered fluid U may be fed to the chamber 100 and to the granulate medium 140 through the bottom end face 104 and the second plate 130 such that the unfiltered fluid U first flows against the largest granular particles and then subsequently against the granular particles of smaller sizes, thereby optimizing the use of the separation capacity provided by the granulate medium 140.

Furthermore, as illustrated in FIG. 3, the particle size of the granular particles in the second portion 144 may increase towards the first plate 120. The larger granular particles in the second portion 144 may prevent smaller granular particles in a boundary area between the first portion 142 and the second portion 144 from escaping. Furthermore, due to the increasing particle sizes of the granular particles in the second portion 144, smaller granular particles may be effectively prevented from escaping through inter-particle gaps in the second portion 144. This may contribute to securing the integrity of the arrangement of the granulate medium 140.

In FIG. 3, only several layers of granular particles of the granulate medium 140 are depicted in each of the first portion 142 and the second portion 144 for the sake of intelligibility. It is appreciated that FIG. 3 shows an illustrative example and the numbers of the layer of granular particles in the first portion 142 and the second portion 144 may vary, in particular significantly larger, depending on the size of the chamber and the particle size distribution of the granulate medium.

In addition, an average particle of the granular particles in the second portion 144 may be equivalent to D10 or larger, or D20 or larger, or D25 or larger, or D30 or larger, or D50 or larger. Accordingly, larger granular particles arranged adjacent to the first plate 120, thereby preventing smaller granular particles from escaping from the granulate medium 140 and the fill volume through the openings 122 of the first plate 120. In this manner, the integrity of the granulate medium 140 may be secured.

It is appreciated that any of the examples shown in FIG. 1 or 3 may also include any of the fastening unit 150, the ultrasonic unit 160 and the load cell 170 although not explicitly shown in the respective drawing for the sake of intelligibility. Furthermore, any of the features and technical effects of the examples shown in FIG. 1 to 3 may be applicable to the respective other examples.

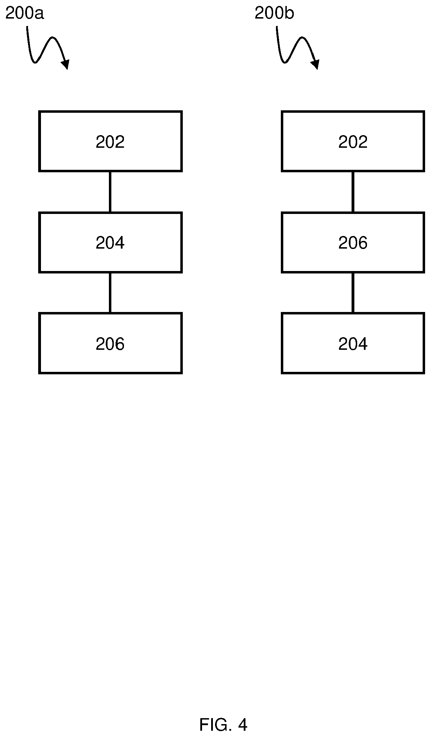

FIG. 4 shows flow diagrams of examples of a method 200a, 200b for separating a substance from a fluid. The methods 200a, 200b may be applicable to any of the examples of the device as described above. The methods 200a, 200b are described in the following with reference to the examples shown in FIG. 1 to 3.

In the method 200a or 200b, at 202, the granulate medium 140 is enclosed in the chamber 100 at the elastic portion 108. As described above, the granulate medium 140 may be enclosed between the first plate 120, the second plate 130 and the elastic portion 108 of the sidewall 106. In other examples, the granulate medium 140 may be enclosed and fixedly held at the elastic portion 108 of the sidewall 106 of the chamber 100 by any other suitable means.

At 204, the fluid, which may correspond to the unfiltered fluid U, is fed through the granulate medium 140, thereby separating the substance from the fluid. The separation and filtration principles by the granulate medium 140 is as discussed above.

At 206, the chamber is (back-)flushed with the flushing fluid B to remove the substance, which has been separated from the unfiltered fluid U, by the granulate medium 140. In method 200a, the backflushing 206 is carried out after the feeding (at 204) of the fluid through the granulate medium 140. In method 200b, the backflushing is performed before the feeding (at 204) of the fluid through the granulate medium 140.

Since the method 200a or 200b relates to using the device as disclosed herein, the method 200a or 200b may inherit any of the technical effects discussed above with respect to the device.

### LIST OF REFERENCE SIGNS

- 100: chamber
- 102: top end face
- 104: bottom end face
- 106: sidewall
- 108: elastic portion
- 110: elastic material
- 120: first plate
- 122: openings
- 130: second plate
- 132: openings
- 140: granulate medium, granular particles
- 142: first portion
- 144: second portion
- 150: fastening unit
- 160: ultrasonic unit
- 162: coupler for ultrasonic unit
- 170: load cell
- 200a, b: method
- 202-206: method steps

- B: flushing fluid
- F: filtered fluid
- H: height, height direction
- U: unfiltered fluid
- W: width, width direction

## Claims

1. A device to separate a substance from a fluid (U), comprising:
a chamber (100) for enclosing a granulate medium to separate a substance from a fluid (U), the chamber (100) comprising two opposite ends (102, 104) and a sidewall (106) extending between the two opposite ends (102, 104),
wherein the sidewall (106) comprises an elastic portion (108) which is provided with an elastic material (110) on the inside of said sidewall (106).

2. The device of claim 1, further comprising:
a first plate (120) and a second plate (130),
wherein the first plate (120) and the second plate (130) are arranged in the chamber (100) such that the first plate (120), the second plate (130) and at least a part of the elastic portion (108) enclose a fill volume to be filled with the granulate medium (140),
wherein the first plate (120) and the second plate (130) each have openings to allow the fluid (U) to flow through.

3. The device of claim 2, further comprising a fastening unit (150) to exert a fastening force on the first plate (120) and/or the second plate (130) to press together the granulate medium (140).

4. The device of claim 2 or 3, further comprising:
a load cell installed at a contact point between the fastening unit (150) and the granulate medium (140) for monitoring a force transmission from the fastening unit (150) to the granulate medium (140).

5. The device of any of claims 2 to 4, further comprising:
a granulate medium (140) filling the fill volume,
wherein, in a first portion (142) of the fill volume adjacent to the second plate (130), the granulate medium (140) is arranged such that an average particle size of the granulate medium (140) gradually increases in a direction towards the second plate (130).

6. The device of claim 5,
wherein, in a second portion (144) of the fill volume between the first portion (142) and the first plate (120), the granulate medium (140) is arranged such that the average particle size of the granulate medium in the second portion (144) gradually increases towards the first plate (120).

7. The device of claim 6,
wherein the first portion (142) extends from the second plate (130) towards the first plate (120) to a first height,
wherein the second portion (144) is located adjacent to the first plate (120) and extends towards the second plate (130) to a second height,
wherein the first height and the second height are determined along a same axis, wherein a ratio of the first height to the second height is between 100 :1 and 1 : 1.

8. The device of any of claims 2 to 7,
wherein the first plate (120) comprises openings (122) to allow a fluid (B, F, U) to flow through,
wherein diameters of the openings (122) of the first plate (120) is 20% to 90% of the average particle size of granular particles of the granulate medium arranged adjacent to the first plate (120).

9. The device of any of claims 5 to 8,
wherein the granulate medium (140) comprises spherical, ellipsoidal or ovoid particles.

10. The device of any of claims 5 to 9,
wherein the granulate medium (140) contains granulate particles coated with a catalytic compound.

11. The device of any of claims 5 to 10,
wherein a thickness of the elastic material (110) is equivalent to D10 to two times D90 of the granulate medium (140).

12. The device of any of the preceding claims,
wherein the elastic material (110) comprises a polymer having an Shore-A hardness of 60 or less and/or an elastic modulus of 5 GPa or less.

13. The device of any of the preceding claims, further comprising an ultrasonic unit (160) coupled to the chamber (100) such to generate an ultrasonic wave in the fill volume.

14. A method of separating a substance from a fluid (U) using the device of any of the preceding claims, comprising:
enclosing a granulate medium (140) in the chamber (100) at the elastic portion (108);
feeding the fluid (U) through the granulate medium (140), thereby separating the substance from the fluid (U); and
before or after the feeding the fluid (U) through the granulate medium (140), flushing the chamber (100) with a flushing fluid (B) to remove the substance from the granulate medium (140).

15. A method of separating a substance from a fluid (U) using the device of any of claims 2 to 13, comprising:
filling the fill volume with a granulate medium (140);
pressing together the granulate medium (140);
feeding the fluid (U) to the granulate medium (140) through the second plate (130), thereby allowing the substance to be separated from the fluid (U) at the granulate medium (140), wherein the fluid (F) is discharged through the first plate (130); and
before or after the feeding of the fluid (U) to the granulate medium (140), feeding a flushing fluid (B) to the granulate medium (140) through the first plate (120) to remove the substance from the chamber (100), wherein the flushing fluid (B) is discharged through the second plate (130).
